# EUROPÄISCHE PATENTSCHRIFT

(11) **EP 4 184 201 B1**
(45) Veröffentlichungstag und Bekanntmachung des Hinweises auf die Patenterteilung: **28.02.2024**
(21) Anmeldenummer: 22203091.8
(22) Anmeldetag: 21.10.2022
(51) Int. Cl.: G01S 7/481, G01S 7/497, G01S 17/42

(54) **OPTOELEKTRONISCHER SENSOR UND VERFAHREN ZUM AUSRICHTEN EINES OPTOELEKTRONISCHEN SENSORS**
OPTOELECTRONIC SENSOR AND METHOD FOR ALIGNING AN OPTOELECTRONIC SENSOR
CAPTEUR OPTOÉLECTRONIQUE ET PROCÉDÉ D'ALIGNEMENT D'UN CAPTEUR OPTOÉLECTRONIQUE

(30) Priorität: 19.11.2021 DE 102021130327
(43) Veröffentlichungstag der Anmeldung: 24.05.2023
(73) Patentinhaber: SICK AG, 79183 Waldkirch (DE)
(72) Erfinder: Menzel, Christoph, 79211 Denzlingen (DE); Baldischweiler, Boris, 79194 Gundelfingen (DE)

(56) Entgegenhaltungen:
- EP-A1- 2 787 323
- DE-A1-102020 106 041

## Beschreibung

Die Erfindung betrifft einen optoelektronischen Sensor und ein Verfahren zum Ausrichten eines optoelektronischen Sensors nach dem Oberbegriff von Anspruch 1 und Anspruch 13.

Viele optoelektronische Sensoren arbeiten nach dem Tastprinzip, bei dem ein Lichtstrahl in den Überwachungsbereich ausgesandt und der von einem Objekt zurückgeworfene Lichtstrahl wieder empfangen wird, um dann das Empfangssignal elektronisch auszuwerten, beispielsweise für eine Abstandsmessung. Dabei wird die Lichtlaufzeit oft mit einem bekannten Phasen- oder Pulsverfahren gemessen, um den Abstand eines angetasteten Objekts zu bestimmen. Optoelektronische Sensoren, die dieses Verfahren verwenden, werden häufig als Lichttaster, TOF (Time-of-Flight) Sensoren oder LIDAR (Light Detection And Ranging) Sensoren bezeichnet. Um den Messbereich zu erweitern, kann der Lichtstrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandsinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen.

Optoelektronische Sensoren der eingangs genannten Art können mit sichtbarem Licht, aber auch mit Licht im infraroten Wellenlängenbereich arbeiten. Die Verwendung infraroten Lichts hat den Vorteil, dass die Messung nicht als störend wahrgenommen wird. Zudem sind Lichtquellen, die infrarotes Licht emittieren, beispielsweise Oberflächenemitter Laser (vertical-cavity surface-emitting laser (VCSEL)), in kleineren Baugrößen verfügbar als Laserdioden, die sichtbares Licht emittieren. Ein Sensor kann also entsprechend kleiner gebaut werden.

Ein infrarotes Lichtsignal hat jedoch den Nachteil, dass der Detektionsbereich, insbesondere der konkrete Ort der Abstandsmessung auf der jeweiligen Oberfläche, mit dem menschlichen Auge ohne zusätzliche Hilfsmittel nicht erkannt werden kann, was insbesondere die Montage und das Ausrichten des Sensors auf einen Überwachungsbereich erschwert.

Aus dem Stand der Technik ist bekannt, dem infraroten Messstrahl einen sichtbaren, sogenannten Pilot- oder Zielstrahl zu überlagern, üblicherweise mit einem dichroitischen Spiegel, wie beispielsweise in der US 2004 0070745 A1 beschrieben. Derartige Systeme sind jedoch verhältnismäßig groß, zudem ist die Justage von Messstrahl und Pilotstrahl aufwändig und anfällig für Dejustagen. Zudem ist eine weitere Lichtquelle zur Bereitstellung des Pilotstrahls nötig, wodurch sich die Anzahl der Bauteile und somit die Komplexität des Sensors erhöht.

Aus der DE 10 2020 106 041 A1 ist ein optoelektronischer Sensor nach Art eines Lichttasters bekannt, der wenigstens eine Messlichtquelle zum Aussenden von Messlichtstrahlen im infraroten Wellenlängenbereich und wenigstens eine Pilotlichtquelle zum Aussenden von Pilotlichtstrahlen im sichtbaren Wellenlängenbereich in einen Überwachungsbereich aufweist, wobei die Messlichtstrahlen und die Pilotlichtstrahlen in einem Lichtwellenleiter koaxial überlagert werden.

Die EP 2 787 323 A1 beschreibt ein Vermessungsgerät mit einer in einer Anzieleinheit integrierten koaxialen Kamera. Das Vermessungsgerät weist eine Laserquelle zur Elektronischen Distanzmessung (EDM) und eine Feinanziel-Lichtquelle auf. Die separaten Lichtquellen werden mit einem Strahlvereiniger koaxial überlagert.

Ausgehend von diesem Stand der Technik ist es Aufgabe der Erfindung, einen verbesserten optoelektronischen Sensor und ein verbessertes Verfahren zum Ausrichten eines optoelektronischen Sensors bereitzustellen.

Diese Aufgabe wird gelöst durch einen optoelektronischen Sensor und Verfahren zum Ausrichten eines optoelektronischen Sensors mit den Merkmalen des Anspruchs 1 beziehungsweise des Anspruchs 13.

Die Erfindung geht von dem Grundgedanken aus, wenigstens einen Teil eines von einer Messlichtquelle eines optoelektronischen Sensors ausgesendeten Messlichtstrahls im infraroten Wellenlängenbereich (typischerweise zwischen 900nm und 1600nm) mittels Frequenzvervielfachung in einen Pilotlichtstrahl im sichtbaren Wellenlängenbereich umzuwandeln. Dies kann durch bekannte Methoden der Frequenzverdopplung ("second harmonic generation", SHG) oder Frequenzverdreifachung ("third harmonic generation", THG) erfolgen, wobei in einem nichtlinearen optischen Element eine Verdopplung oder Verdreifachung der Frequenz des eingestrahlten Messlichtstrahls erfolgt. Damit halbiert beziehungsweise drittelt sich die Wellenlänge des in das nichtlineare Medium eingestrahlten infraroten Messlichtstrahls, so dass ein Pilotlichtstrahl mit sichtbarer Wellenlänge erzeugt wird.

Ein erfindungsgemäßer optoelektronischer Sensor weist somit wenigstens eine Messlichtquelle zum Aussenden wenigstens eines Messlichtstrahls im infraroten Wellenlängenbereich entlang eines Sendestrahlengangs in einen Überwachungsbereich auf. Ein Lichtstrahl ist dabei nicht als Strahl im Sinne der Strahlenoptik innerhalb eines größeren Lichtbündels zu verstehen, sondern als Lichtbündel, das im Überwachungsbereich beim Auftreffen auf ein Objekt entsprechende Lichtflecken erzeugt. Ein zugehöriger Lichtempfänger ist in der Lage, aus reflektierten oder remittierten Messlichtstrahlen Empfangssignale zu erzeugen. Eine Steuer- und Auswerteeinheit steuert die Messlichtquelle und den Lichtempfänger und kann die Empfangssignale des Lichtempfängers auswerten, um Informationen über das Objekt, wie beispielsweise einen Abstand zum Sensor, zu gewinnen.

Im Sendestrahlengang ist wenigstens ein nichtlineares optisches Element angeordnet, das dazu ausgebildet ist, durch Frequenzvervielfachung aus wenigstens einem Teil des Messlichtstrahls im infraroten Wellenlängenbereich einen Pilotlichtstrahl im sichtbaren Wellenlängenbereich zu erzeugen. Als nichtlineares optisches Element ist dabei ein optisches Element zu verstehen in dem durch nichtlineare Wechselwirkung eine Frequenzvervielfachung des in das Medium eingestrahlten Lichts stattfindet. Bekannte nichtlineare optische Elemente sind beispielsweise doppelbrechende Kristalle aus Lithiumniobat, Kaliumdihydrogenphosphat, Beta-Bariumborat oder Lithiumtriborat. Neuartige Materialien für nichtlineare optische Elemente sind beispielsweise Graphen oder sogenannte zweidimensionale Übergangsmetall-Dichalcogenide (Two-Dimensional Transition Metal Dichalcogenides, TMDCs).

Mit Hilfe des Pilotlichtstrahls im sichtbaren Wellenlängenbereich lässt sich der Sensor dann einfach im Überwachungsbereich ausrichten, da der Pilotlichtstrahl auf Objekten im Überwachungsbereich sichtbare Lichtflecken erzeugt.

Die Erfindung hat den Vorteil, dass keine separate Lichtquelle zur Erzeugung eines Pilotlichtstrahls nötig ist, womit sich die Komplexität des Sensors reduziert.

Bevorzugt kann das nichtlineare optische Element als sogenanntes optisches Metamaterial ausgebildet sein. Optische Metamaterialien weisen Strukturgrößen auf, die kleiner als die Wellenlängen des eingestrahlten Lichts sind. Metamaterialien zur Frequenzvervielfachung sind beispielsweise in der US 7,515,330 B2 beschrieben. Die Verwendung eines Metamaterials als nichtlineares optisches Element hat den Vorteil, dass eine effizientere Frequenzvervielfachung möglich ist und somit geringere Messlichtleistungen benötigt werden. Als Metamaterialien oder Metaoberflächen sind insbesondere strukturierte Materialien zu verstehen, die aufgrund Ihrer Strukturform oder Periode resonant bei der Messlichtwellenlänge oder der Pilotlichtwellenlänge oder beiden sind. Dabei kann das nichtlineare Material selbst so strukturiert sein, dass die Einzelelemente resonant sind, oder das resonante Metamaterial kann von einem unstrukturierten nichtlinearen Material umgeben sein, beispielsweise metallische Partikel auf einer Schicht eines nichtlinearen Materials. Aufgrund dieser Resonanz kommt es zu einer Feldüberhöhung im nichtlinearen Material, beziehungsweise an dessen Oberfläche und damit zu verstärkter nichtlinearer Frequenzkonversion, also einer gegenüber einem unstrukturierten bulk Material erhöhten Konversionseffizienz. Besonders vorteilhaft sind Materialien, die eine Nichtlinearität der elektrischen Suszeptibilität zweiter Ordnung (χ2) aufweisen, also eine Frequenzverdopplung des eingestrahlten Lichts erzeugen können, da die Effizienz der Frequenzkonversion grundsätzlich mit der Ordnung n der Nichtlinearität abnimmt.

Besonders bevorzugt kann das nichtlineare optische Element als optische Metaoberfläche, im Folgenden auch nur "Metaoberfläche" genannt, ausgebildet sein, die in Strahlrichtung eine deutlich geringere Ausdehnung aufweist als die oben genannten doppelbrechenden Kristalle oder Metamaterialien. Derartige Metaoberflächen können auch zur Strahlformung von Messlichtstrahl und/oder Pilotlichtstrahl geeignet sein, wie weiter unten noch ausführlicher erläutert wird.

Das nichtlineare optische Element kann bevorzugt derart im Sendstrahlengang des optoelektronischen Sensors angeordnet sein, dass Messlichtstrahl und Pilotlichtstrahl kollinear, insbesondere koaxial verlaufen. Dadurch werden Messlichtstrahl und Pilotlichtstrahl überlagert und können im Überwachungsbereich im Wesentlichen überlappende Lichtflecken erzeugen.

In einer Ausführungsform der Erfindung kann dem nichtlinearen optischen Element in Lichtstrahlrichtung eine Sendeoptik zur Einstellung von Öffnungswinkeln und/oder Durchmessern des Messlichtstrahls und/oder des Pilotlichtstrahls nachgeordnet sein. Das nichtlineare optische Element ist dann entsprechend zwischen der Messlichtquelle und der Sendeoptik angeordnet. Damit kann die Größe der im Überwachungsbereich beim Auftreffen auf ein Objekt erzeugten Lichtflecken eingestellt werden. Die Sendeoptik kann als separate Optik ausgeführt oder Bestandteil des nichtlinearen optischen Elements sein.

Alternativ oder zusätzlich kann dem nichtlinearen optischen Element in Lichtstrahlrichtung eine Kollimationsoptik zur Kollimation der Messlichtstrahlen vorgeordnet sein. Die Kollimationsoptik ist dann entsprechend zwischen der Messlichtquelle und dem nichtlinearen optischen Element angeordnet. Die Kollimationsoptik kann als separate Optik ausgeführt, Bestandteil der Messlichtquelle oder Bestandteil des nichtlinearen optischen Elements sein. Durch die Verwendung einer Kollimationsoptik kann der Strahldurchmesser des Messlichtstrahls angepasst werden und eine effiziente Ausleuchtung des nichtlinearen optischen Elements erfolgen.

Die Sendeoptik und/oder die Kollimationsoptik können bevorzugt als Metaoberflächen ausgebildet sein. Als Metaoberflächen im Sinne dieser Anmeldung sind optisch wirksame Schichten zu verstehen, die Strukturen mit Strukturgrößen kleiner als die Wellenlängen des Messlichtstrahls und typischerweise ein binäres Höhenprofil aufweisen. Derartige Flächen sind aus der Fachliteratur bekannt (z.B.: Flat optics with designer metasurfaces, Nature Materials 13, 139-150 (2014). DOI: 10.1038/NMAT3839) und können durch geeignete Wahl der Strukturen Eigenschaften des Messlichtstrahls wie Phase, Amplitude und damit die Ausbreitungsrichtung, Polarisation oder Wellenlänge definiert verändern, wobei die Veränderung insbesondere wellenlängenabhängig erfolgen kann. Optiken aus Metaoberflächen werden auch als "Flache Optiken" bezeichnet, da Ihre Ausdehnung in Strahlrichtung bei vergleichbarer optischer Wirkung deutlich geringer als die klassischer Optiken ist und typischerweise im Bereich von 50nm bis 1500nm liegen kann, wobei Metaoberflächen aus metallischen Materialien üblicherweise geringere Ausdehnungen aufweisen als Metaoberflächen aus dielektrischen Materialien.

Die Verwendung von Metaoberflächen hat den Vorteil, dass Eigenschaften des Messlichtstrahls und des Pilotlichtstrahls unabhängig voneinander verändert werden können. Zudem ist aufgrund der geringen Ausdehnung der Metaoberflächen in Lichtstrahlrichtung ein besonders kompakter Aufbau des Sensors möglich.

Der optoelektronische Sensor kann dazu ausgebildet sein, das nichtlineare optische Element in den Sendestrahlengang ein- und auszubringen. Das nichtlineare optische Element kann dazu beweglich angeordnet sein, beispielsweise mittels eines Filterrades oder einer vergleichbaren Mechanik in den Sendestrahlengang ein- und ausschwenkbar sein. Nach erfolgter Ausrichtung des Sensors kann das nichtlineare optische Element aus dem Sendestrahlengang ausgebracht werden, so dass wieder der gesamte Durchmesser des Sendestrahlengangs für den Messlichtstrahl zur Verfügung steht.

In einer Ausführungsform der Erfindung kann ein als Metaoberfläche ausgeführtes nichtlineares optisches Element als Folie ausgebildet sein beziehungsweise eine Folie aufweisen, welche auf ein Fenster des optoelektronischen Sensors, durch das die Messlichtstrahlen in den Überwachungsbereich geleitet werden, aufgebracht werden kann. Wenn die Folie auf das Fenster aufgebracht ist, kann wenigstens ein Teil des Messlichtstrahls im infraroten Wellenlängenbereich in einen Pilotlichtstrahl im sichtbaren Wellenlängenbereich umgewandelt werden. Nach erfolgter Ausrichtung beziehungswiese Justage des Sensors kann die Folie wieder vom Fenster entfernt werden, so dass nur noch der wenigstens eine Messlichtstrahl im infraroten Wellenlängenbereich in den Überwachungsbereich ausgesendet wird. Die Folie kann bevorzugt wiederverwendbar ausgeführt sein und somit mehrfach an einem oder mehreren Sensoren verwendet werden. Damit ergibt sich eine kostengünstige Ausführung zur Ausrichtung von einem oder mehreren Sensoren. Die Folie kann optional auch Metaoberflächen zur Strahlformung von Messlicht- und/oder Pilotlichtstrahl aufweisen, insbesondere zur Einstellung der Öffnungswinkel des Messlicht- und/oder des Pilotlichtstrahls.

In einer weiteren Ausführungsform kann ein Fenster des optoelektronischen Sensors, durch das die Messlichtstrahlen in den Überwachungsbereich geleitet werden, das als Metaoberfläche ausgeführte nichtlineare optische Element aufweisen, wobei das Fenster nach Ausrichtung beziehungsweise Justage des Sensors durch ein Fenster ohne nichtlineares optisches Element ausgetauscht werden kann. Damit kann ein Justagemittel bereitgestellt werden, welches gegenüber der in der vorherigen Ausführungsform beschriebenen Folie eine verbesserte Robustheit bei mehrfacher Verwendung aufweisen kann. Das Fenster kann wie die Folie optional auch Metaoberflächen zur Strahlformung des Messlicht- und/oder Pilotlichtstrahls aufweisen, insbesondere zur Einstellung der Öffnungswinkel des Messlicht- und/oder Pilotlichtstrahls.

In den verschiedenen Ausführungsformen kann dem nichtlinearen optischen Element in Strahlrichtung ein optisches Strahlformungselement zur Änderung eines Strahlquerschnitts des Pilotlichtstrahls nachgeordnet sein. Das optische Strahlformungselement kann beispielsweise derart ausgebildet sein, dass der Pilotlichtstrahl beim Auftreffen auf ein Objekt im Überwachungsbereich kreuzförmige Lichtflecken erzeugt. Durch eine entsprechende Lichtfleckform kann die Ausrichtung des Sensors weiter vereinfacht werden. Das optische Strahlformungselement kann als diffraktives optisches Element oder als Metaoberfläche ausgebildet sein. Das Strahlformungselement kann alternativ so ausgebildet sein, dass Pilot- und Messlichtstrahl beim Auftreffen auf ein Objekt im Überwachungsbereich konzentrische Lichtflecken erzeugen, wobei ein Durchmesser eines durch den Pilotlichtstrahl erzeugten Lichtflecks kleiner ist als ein Durchmesser eines durch den Messlichtstrahl erzeugten Lichtflecks, oder umgekehrt.

Dem Lichtempfänger kann eine Empfangsoptik zur Fokussierung der reflektierten oder remittierten Messlichtstrahlen auf den Lichtempfänger vorgeordnet sein. Die Empfangsoptik kann, vergleichbar zur Sendeoptik, als Metaoberfläche ausgeführt sein. Die Metaoberfläche kann dabei so ausgebildet sein, dass nur reflektierte oder remittierte Messlichtstrahlen auf den Sensor abgebildet werden und Lichtstrahlen aus anderen Wellenlängenbereichen vom Lichtempfänger weggelenkt werden, beispielsweise eine Strahlfalle. Die Empfangsoptik wirkt dann ähnlich wie ein optisches Filter.

Dem Lichtempfänger kann alternativ oder zusätzlich ein optisches Filter zur Unterdrückung von Störlicht, insbesondere von reflektierten oder remittierten Pilotlichtstrahlen vorgeordnet sein. Das optische Filter kann ebenfalls als Metaoberfläche ausgebildet sein.

Die Steuer- und Auswerteeinheit des Sensors kann dazu eingerichtet sein, verschiedene Betriebsmodi des Sensors bereit zu stellen. Ein Betriebsmodus kann beispielsweise ein Ausrichtungs- beziehungsweise Justagemodus sein, in dem das nichtlineare optische Element in den Sendestrahlengang eingebracht ist, so dass Messlichtstrahl und Pilotlichtstrahl gleichzeitig aktiviert sind. Ein weiterer Betriebsmodus kann ein Messmodus sein, in dem das nichtlineare optische Element aus dem Sendestrahlengang entfernt ist, so dass der Pilotlichtstrahl deaktiviert ist und durch den Pilotlichtstrahl erzeugtes Störlicht für den Lichtempfänger reduziert wird.

Gemäß einer Weiterbildung ist der optoelektronische Sensor dazu ausgebildet, den Abstand der jeweiligen Oberfläche zum Sensor aus einer Laufzeit eines pulsförmigen Lichtsignals zur jeweiligen Oberfläche und zurück oder aus der Phasenverschiebung eines von dem Sensor ausgesandten modulierten Lichtsignales zu dem an der jeweiligen Oberfläche reflektierten Lichtsignal zu ermitteln. Der optoelektronische Sensor kann also insbesondere nach dem Time-of-Flight-Prinzip (ToF) funktionieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Im Folgenden wird die Erfindung anhand eines Ausführungsbeispiels unter Bezugnahme auf die Zeichnung im Einzelnen erläutert. In der Zeichnung zeigen:
- Figur 1: eine schematische Darstellung eines erfindungsgemäßen optoelektronischen Sensors;
- Figur 2: eine schematische Darstellung eines erfindungsgemäßen optoelektronischen Sensors mit optische Metamaterialien aufweisenden Komponenten;
- Figur 3: eine schematische Darstellung einer Ausführungsform der Erfindung mit einer ein nichtlineares optisches Element aufweisenden Folie;
- Figur 4: eine beispielhafte Anordnung zur Frequenzvervielfachung und Strahlformung in einem erfindungsgemäßen optoelektronischen Sensor;
- Figur 5: beispielhafte, von Messlichtstrahl und Pilotlichtstrahl beim Auftreffen auf ein Objekt im Überwachungsbereich erzeugte Lichtflecken.

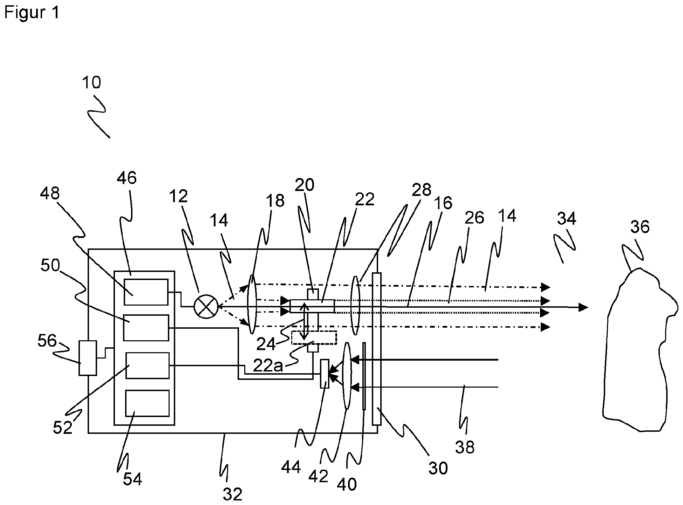

Figur 1 zeigt eine schematische Darstellung eines optoelektronischen Sensors 10 in einer Ausführungsform als Lichtaster. Der Sensor 10 weist eine Messlichtquelle 12, beispielsweise eine Laserdiode oder einen Oberflächenemitter (vertical-cavity surface-emitting laser (VCSEL)) auf, die einen Messlichtstrahl 14 (repräsentiert durch strichpunktierte Linien) im infraroten Wellenlängenbereich entlang eines Sendestrahlengangs 16 emittiert. Der Messlichtquelle 12 ist in Lichtstrahlrichtung eine Kollimationsoptik 18 zur Kollimation des Messlichtstrahls 14 nachgeordnet. Die Kollimationsoptik 18 ist hier zunächst rein beispielhaft als bikonvexe Linse dargestellt, kann aber einen komplexeren Aufbau aufweisen, beispielsweise als ein mehrere Linsen aufweisendes Objektiv ausgebildet sein.

Eine Mechanik 20 ist dazu eingerichtet, ein nichtlineares optisches Element 22 (wie mit dem Doppelpfeil 24 angedeutet) in den Sendestrahlengang 16 des Sensors 10 ein- und auszubringen. Der ausgebrachte Zustand des nichtlinearen optischen Elements ist durch ein gestricheltes Rechteck 22a gezeigt. Als geeignete Mechanik kann beispielsweise ein Filterrad oder ein Verschiebetisch dienen. Im eingebrachten Zustand wandelt das nichtlineare optische Element 22, beispielsweise ein doppelbrechender Kristall einen Teil des Messlichtstrahls 14 im infraroten Wellenlängenbereich in einen Pilotlichtstrahl 26 (repräsentiert durch strichpunktierte Linien) im sichtbaren Wellenlängenbereich um.

Messlichtstrahl 14 und Pilotlichtstrahl 26 können mit einer dem nichtlinearen optischen Element 22 in Lichtstrahlrichtung nachgeordneten Sendeoptik 28 durch ein Fenster 30 im Gehäuse 32 des Sensors 10 in einen Überwachungsbereich 34 projiziert werden. Die Sendeoptik 28 kann dazu eingerichtet sein, Strahldurchmesser und Öffnungswinkel des Messlichtstrahls 14 und/oder des Pilotlichtstrahls 26 einzustellen. Die Sendeoptik 28 ist, wie die Kollimationsoptik 18 zunächst rein beispielhaft als bikonvexe Linse dargestellt, kann aber einen komplexeren Aufbau aufweisen, beispielsweise als ein mehrere Linsen aufweisendes Objektiv ausgebildet sein.

Das an einem Objekt 36 im Überwachungsbereich 34 reflektierte oder remittierte Licht wird als Empfangslicht 38 über ein (optionales) optisches Filter 40 zur Unterdrückung von Störlicht und eine Empfangsoptik 42 auf einen Lichtempfänger 44 geleitet.

Der Lichtempfänger 44 ist bevorzugt als Photodiode, APD (Avalanche Photo Diode), oder SPAD (Single-Photon Avalanche Diode), oder SPAD Matrix (SPAD Array) ausgebildet.

In dem Sensor 10 ist weiterhin eine Steuer- und Auswertungseinheit 46 vorgesehen, die mit der Messlichtquelle 12, der Pilotlichtquelle 20, der Mechanik und dem Lichtempfänger 44 verbunden ist. Die Steuer- und Auswerteeinheit 46 umfasst eine Messlichtquellensteuerung 48, eine Mechaniksteuerung 50, eine Lichtlaufzeitmesseinheit 52, und eine Objektentfernungsschätzeinheit 54, wobei dies zunächst nur funktionale Blöcke sind, die auch in gleicher Hardware oder in anderen funktionalen Einheiten wie in der Messlichtquellen 12, der Mechaniksteuerung 50 oder im Lichtempfänger 44 implementiert sein können. Über eine Schnittstelle 56 kann die Steuer- und Auswertungseinheit 46 Messdaten ausgeben beziehungsweise umgekehrt Steuer- und Parametrieranweisungen entgegennehmen. Die Steuer- und Auswertungseinheit 46 kann auch in Form von lokalen Auswertungsstrukturen auf einem Chip des Lichtempfängers 12 angeordnet sein oder als Teilimplementierung mit den Funktionen einer zentralen Auswertungseinheit (nicht gezeigt) zusammenwirken.

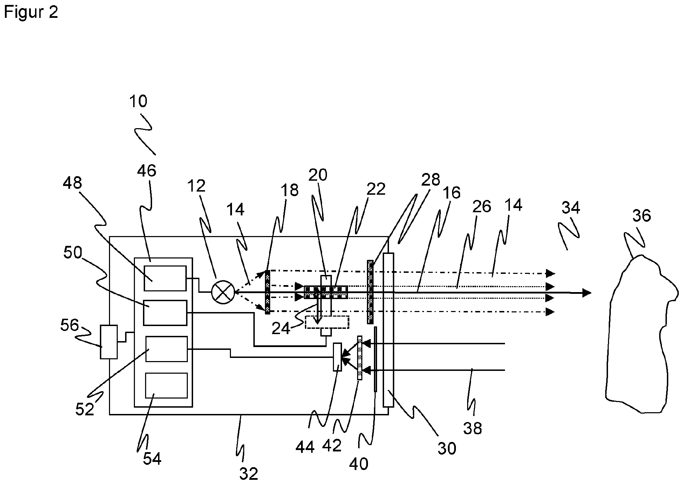

Die Figur 2 zeigt ein weiteres Ausführungsbeispiel eines erfindungsgemäßen optoelektronischen Sensors 10. Im Unterschied zum Ausführungsbeispiel aus Figur 1 weisen die Kollimationsoptik 18, die Sendeoptik 28 und die Empfangsoptik 42 optische Metaoberflächen auf oder sind als optische Metaoberflächen ausgebildet. Dadurch kann der Sensor 10 kompakter gebaut werden, da die Ausdehnung der Metaoberflächen in Lichtstrahlrichtung deutlich geringer ist als die Ausdehnung klassischer Optiken. Das nichtlineare optische Element 22 weist ebenfalls ein optisches Metamaterial auf, wodurch eine effizientere Frequenzumwandlung im Vergleich zu doppelbrechenden Kristallen möglich ist.

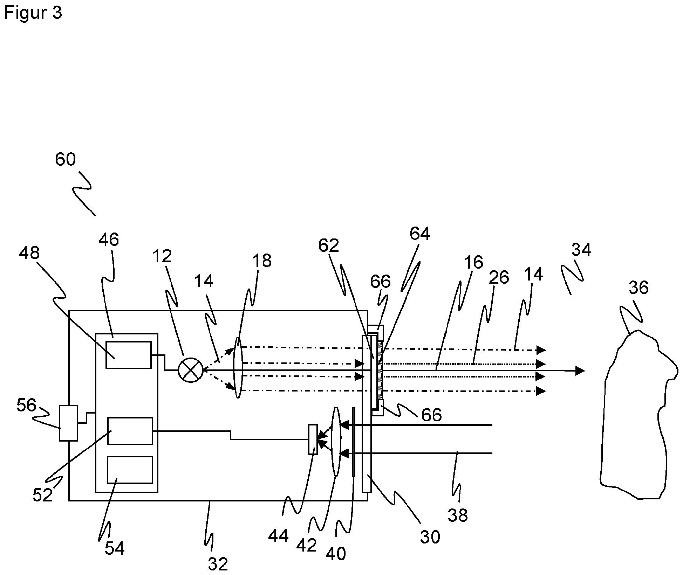

Die Figur 3 zeigt eine weitere Ausführungsform der Erfindung. Ein optoelektronischer Sensor 60, weist zunächst wie die Sensoren aus den in Figur 1 und Figur 2 gezeigten Ausführungsbeispielen eine Messlichtquelle 12 auf, die einen Messlichtstrahl 14 (repräsentiert durch strichpunktierte Linien) im infraroten Wellenlängenbereich entlang eines Sendestrahlengangs 16 emittiert. Der Messlichtquelle 12 ist in Lichtstrahlrichtung eine Kollimationsoptik 18 zur Kollimation des Messlichtstrahls 14 nachgeordnet. Der Messlichtstrahl 14 wird durch ein Fenster 30 im Gehäuse 32 des Sensors 60 in einen Überwachungsbereich 34 projiziert. Das an einem Objekt 36 im Überwachungsbereich 34 reflektierte oder remittierte Licht wird als Empfangslicht 38 über ein (optionales) optisches Filter 40 zur Unterdrückung von Störlicht und eine Empfangsoptik 42 auf einen Lichtempfänger 44 geleitet.

In dem Sensor 60 ist ebenfalls eine Steuer- und Auswertungseinheit 46 vorgesehen, die mit der Messlichtquelle 12, der Pilotlichtquelle 20 und dem Lichtempfänger 44 verbunden ist. Die Steuer- und Auswerteeinheit 46 umfasst eine Messlichtquellensteuerung 48, eine Lichtlaufzeitmesseinheit 52, und eine Objektentfernungsschätzeinheit 54, wobei dies zunächst nur funktionale Blöcke sind, die auch in gleicher Hardware oder in anderen funktionalen Einheiten wie in der Messlichtquellen 12, oder im Lichtempfänger 44 implementiert sein können. Über eine Schnittstelle 56 kann die Steuer- und Auswertungseinheit 46 Messdaten ausgeben beziehungsweise umgekehrt Steuer- und Parametrieranweisungen entgegennehmen. Die Steuer- und Auswertungseinheit 46 kann auch in Form von lokalen Auswertungsstrukturen auf einem Chip des Lichtempfängers 12 angeordnet sein oder als Teilimplementierung mit den Funktionen einer zentralen Auswertungseinheit (nicht gezeigt) zusammenwirken.

Erfindungsgemäß kann auf dem Fenster 30 des Sensors eine Folie 62 lösbar befestigt sein, die wenigstens ein nichtlineares optisches Element 64 aufweist, das als Metaoberfläche ausgebildet ist und zumindest einen Teil des Messlichtstrahls 14 im infraroten Wellenlängenbereich in einen Pilotlichtstrahl 26 (repräsentiert durch punktierte Linien) im sichtbaren Wellenlängenbereich umwandelt. Die lösbare Befestigung der Folie 62 kann durch Adhäsion am Fenster 30, oder durch Befestigungselemente 66 am Gehäuse 32 oder Fenster 30 des Sensors 60 erfolgen. Geeignete Befestigungselemente 66 können beispielsweise Schienen oder Klammern sein.

In einer alternativen, nicht gezeigten Ausführungsform der Erfindung kann das als Metaoberfläche ausgebildete nichtlineare optische Element 64 direkt auf einem Fenster aufgebracht sein, welches mit dem Fenster 30 des Sensors 60 austauschbar ist. Zur Einrichtung des Sensors 60 wird dann das Fenster mit der Metaoberfläche in den Sensor eingesetzt, so dass zumindest ein Teil des Messlichtstrahls 14 im infraroten Wellenlängenbereich in einen Pilotlichtstrahl 26 (repräsentiert durch punktierte Linien) im sichtbaren Wellenlängenbereich umgewandelt wird. Nachdem der Sensor 60 ausgerichtet wurde, kann das Fenster mit der Metaoberfläche wieder durch das Fenster 30 des Sensors 60 ersetzt werden, so dass der Sensor nur den Messlichtstrahl 14 im infraroten Wellenlängenbereich emittiert.

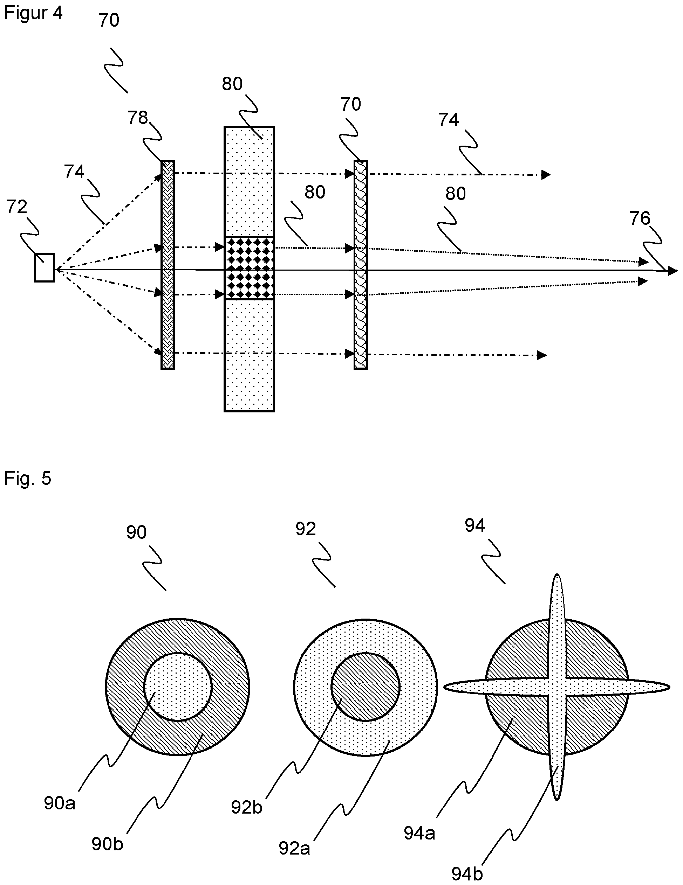

Figur 4 zeigt eine Detailskizze einer beispielhaften Anordnung 70 zur Frequenzvervielfachung und Strahlformung in einem erfindungsgemäßen optoelektronischen Sensor. Eine Messlichtquelle 72, beispielsweise eine Laserdiode oder einen Oberflächenemitter (vertical-cavity surface-emitting laser (VCSEL)) emittiert einen divergenten Messlichtstrahl 74 (repräsentiert durch strichpunktierte Linien) im infraroten Wellenlängenbereich entlang eines Sendestrahlengangs 76. Der Messlichtquelle 72 ist in Lichtstrahlrichtung eine Kollimationsoptik 78 zur Kollimation des Messlichtstrahls 74 nachgeordnet. Die Kollimationsoptik 78 ist als optische Metaoberfläche ausgebildet. Der kollimierte Messlichtstrahl 74 trifft auf ein als Metamaterial oder Metaoberfläche ausgebildetes nichtlineares optisches Element 80, das einen Teil des Messlichtstrahls 74 infraroten Wellenlängenbereich in einen Pilotlichtstrahl 82 im sichtbaren Wellenlängenbereich umwandelt. Das nichtlineare optische Element 80 kann verschiedene Zonen 80a, 80b aufweisen, wobei Messlichtstrahlen 74, die auf eine erste Zone 80a treffen, in Pilotlichtstrahlen umgewandelt werden, während Messlichtstrahlen 74, die auf eine zweite Zone 80b treffen, das nichtlineare optische Element 80 im Wesentlichen unverändert durchstrahlen. Das nichtlineare optische Element 80 kann also Zonen aufweisen, die keinen nichtlinearen Effekt auf den eingestrahlten Messlichtstrahl ausüben. Dem nichtlinearen optischen Element 80 in Strahlrichtung nachgeordnet ist eine als Metaoberfläche ausgebildete Sendeoptik 82, die dazu eingerichtet sein kann den Messlichtstrahl 74 und/oder den Pilotlichtstrahl 82 wellenlängenabhängig zu beeinflussen. Im Ausführungsbeispiel ist die Sendeoptik 82 derart ausgeführt, dass der Messlichtstrahl 74 im Wesentlichen kollimiert bleibt, während der Pilotlichtstrahl 82 auf einen Punkt in einem definierten Abstand zur Sendeoptik fokussiert wird. Die Sendeoptik 82 kann aber insbesondere auch derart ausgeführt sein, dass der Messlichtstrahl 74 und der Pilotlichtstrahl 82 im Wesentlichen kollimiert in den Überwachungsbereich 34 projiziert werden.

Figur 5 zeigt beispielhafte Lichtflecken 90, 92, 94 von Messlichtstrahlen und Pilotlichtstrahlen beim Auftreffen auf ein Objekt im Überwachungsbereich. Im ersten beispielhaften Lichtfleck 90 ist der Messlichtstrahlfleck 90a konzentrisch um den Pilotlichtstrahlfleck 90b angeordnet, im zweiten beispielhaften Lichtfleck 92 ist der Pilotlichtstrahlfleck 92b konzentrisch um den Messlichtstrahlfleck 92a angeordnet. Der dritte beispielhafte Lichtfleck 94 zeigt einen kreuzförmigen Pilotlichtstrahlfleck 94b der mittig über einem kreisförmigen Messlichtstrahlfleck 94a angeordnet ist. Es versteht sich, dass die Darstellungen rein beispielhaft sind, insbesondere werden die im Überwachungsbereich erzeugten Lichtstrahlflecken in der Regel nicht scharf begrenzt sein.

Die Form der Lichtflecken 90, 92, 94 kann beispielsweise durch eine entsprechende Strukturierung des nichtlinearen optischen Elements erfolgen, durch aus dem Stand der Technik bekannte diffraktive Elemente zur Strahlformung, oder eine weitere zu einer entsprechenden Stahlformung ausgebildete optische Metaoberfläche, welche mit dem nichtlinearen optischen Element in den Strahlengang des optoelektronischen Sensors eingebracht werden können.

## Patentansprüche

1. Optoelektronischer Sensor (10, 60) mit wenigstens einer Messlichtquelle (12) zum Aussenden wenigstens eines Messlichtstrahls (14) im infraroten Wellenlängenbereich entlang eines Sendestrahlengangs (16) in einen Überwachungsbereich (34), einem Lichtempfänger (44) zum Empfangen von aus dem Überwachungsbereich (34) remittierten oder reflektierten Messlichtstrahlen (38) und Erzeugen entsprechender Empfangssignale, einer Steuer- und Auswerteeinheit (46) zur Ansteuerung des Lichtempfängers (44) und der Messlichtquelle (12) und zur Auswertung der Empfangssignale,
**dadurch gekennzeichnet, dass** der optoelektronische Sensor (10) wenigstens ein nichtlineares optisches Element (22) zum Erzeugen wenigstens eines Pilotlichtstrahls (26) im sichtbaren Wellenlängenbereich aus wenigstens einem Teil des Messlichtstrahls (14) aufweist.

2. Optoelektronischer Sensor (10) nach Anspruch 1, wobei das nichtlineare optische Element (22) wenigstens einen doppelbrechenden Kristall aufweist.

3. Optoelektronischer Sensor (10) nach Anspruch 1, wobei das nichtlineare optische Element (22) als optisches Metamaterial ausgebildet ist.

4. Optoelektronischer Sensor (10, 60) nach Anspruch 1, wobei das nichtlineare optische Element (22, 64) als optische Metaoberfläche ausgebildet ist.

5. Optoelektronischer Sensor (10, 60) nach einem der vorhergehenden Ansprüche, wobei das nichtlineare optische Element (22, 64) derart im Sendestrahlengang (16) angeordnet ist, dass der Messlichtstrahl (14) und der Pilotlichtstrahl (26) kollinear, insbesondere koaxial verlaufen.

6. Optoelektronischer Sensor (10) nach einem der vorhergehenden Ansprüche, wobei dem nichtlinearen optischen Element (22) in Lichtstrahlrichtung eine Sendeoptik (28) zur Einstellung von Öffnungswinkel und/oder Strahldurchmesser des Messlichtstrahls (14) und/oder des Pilotlichtstrahls (26) nachgeordnet ist.

7. Optoelektronischer Sensor (10, 60) nach einem der vorhergehenden Ansprüche wobei dem nichtlinearen optischen Element (22, 64) in Lichtstrahlrichtung eine Kollimationsoptik (18) zur Kollimation des Messlichtstrahls (14) vorgeordnet ist.

8. Optoelektronischer Sensor (10) nach Anspruch 7, wobei die Sendeoptik (28) und/oder die Kollimationsoptik (18) als flache Optik mit wenigstens einer Metaoberfläche ausgebildet ist

9. Optoelektronischer Sensor (10, 60) nach einem der vorhergehenden Ansprüche, wobei das nichtlineare optische Element (22, 64) in den Sendestrahlengang (16) ein- und ausbringbar ist.

10. Optoelektronischer Sensor (60) nach Anspruch 4, wobei das nichtlineare optische Element (64) Teil eines Fensters (30) des optoelektronischen Sensors ist.

11. Optoelektronischer Sensor (60) nach Anspruch 4, wobei das nichtlineare optische Element (64) eine Folie (62) aufweist, die auf ein Fenster (30) des optoelektronischen Sensors aufbringbar ist.

12. Optoelektronischer Sensor (60) nach Anspruch 11, wobei der optoelektronische Sensor (60) Befestigungselemente (66) zur Befestigung der Folie (62) am Fenster (30) des optoelektronischen Sensors (60) aufweist.

13. Verfahren zum Ausrichten eines optoelektronischen Sensors (10, 60) nach Art eines Lichttasters, mit den Schritten
- Erzeugen wenigstens eines Messlichtstrahls (14) im infraroten Wellenlängenbereich mit einer Messlichtquelle (12),
- Aussenden des Messlichtstrahls (14) entlang eines Sendestrahlengangs (16) in einen Überwachungsbereich (34),
- Einbringen eines nichtlinearen optischen Elements (22, 64) in den Sendestrahlengang (16), wobei das nichtlineare optische Element (22, 64) wenigstens einen Pilotlichtstrahl (26) im sichtbaren Wellenlängenbereich aus wenigstens einem Teil des Messlichtstrahls (14) erzeugt,
- Ausrichten des optoelektronischen Sensors (10, 60) mit Hilfe von im Überwachungsbereich (34) durch den Pilotlichtstrahl (26) erzeugten Lichtflecken.

14. Verfahren nach Anspruch 13, wobei das nichtlineare optische Element (22) mit einer Mechanik (20) im Sensor (10) in den Sendestrahlengang (16) eingebracht wird.

15. Verfahren nach Anspruch 13, wobei das nichtlineare optische Element (64) als optische Metaoberfläche auf einer Folie (62) ausgebildet ist, die auf einem Fenster (30) des Sensors (60) aufgebracht wird.

## Claims

1. Optoelectronic sensor (10, 60) with at least one measuring light source (12) for emitting at least one measuring light beam (14) in the infrared wavelength range along a transmitting beam path (16) into a monitoring area (34), a light receiver (44) for receiving measured light rays (38) emitted or reflected from the monitoring area (34) and generating corresponding reception signals, a control and evaluation unit (46) for controlling the light receiver (44) and the measuring light source (12) and for evaluating the receiving signals,
**characterized in that** the photoelectric sensor (10) has at least one nonlinear optical element (22) for generating at least one pilot light beam (26) in the visible wavelength range from at least one part of the measuring light beam (14).

2. Optoelectronic sensor (10) according to claim 1, wherein the nonlinear optical element (22) comprises at least one birefringent crystal.

3. Optoelectronic sensor (10) according to claim 1, wherein the nonlinear optical element (22) is formed as an optical metamaterial.

4. Optoelectronic sensor (10, 60) according to claim 1, wherein the nonlinear optical element (22, 64) is formed as an optical metasurface.

5. Optoelectronic sensor (10, 60) according to one of the preceding claims, wherein the nonlinear optical element (22, 64) is arranged in the transmitting optical path (16) in such a way that the measuring light beam (14) and the pilot light beam (26) are collinear, in particular coaxial.

6. Optoelectronic sensor (10) according to one of the preceding claims, wherein the nonlinear optical element (22) is followed in the light beam direction by a transmitting optics (28) for adjusting the opening angle and/or beam diameter of the measuring light beam (14) and/or the pilot light beam (26).

7. Optoelectronic sensor (10, 60) according to one of the preceding claims, wherein the nonlinear optical element (22, 64) is preceded in the light beam direction by a collimation optics (18) for collimating the measuring light beam (14).

8. Optoelectronic sensor (10) according to claim 7, wherein the transmitting optics (28) and/or the collimation optics (18) are designed as flat optics with at least one metasurface

9. Optoelectronic sensor (10, 60) according to one of the previous claims, wherein the nonlinear optical element (22, 64) is insertable and retractable into the transmitting beam path (16).

10. Optoelectronic sensor (60) according to claim 4, wherein the nonlinear optical element (64) is part of a window (30) of the optoelectronic sensor.

11. Optoelectronic sensor (60) according to claim 4, wherein the nonlinear optical element (64) comprises a foil (62) which can be applied to a window (30) of the optoelectronic sensor.

12. Optoelectronic sensor (60) according to claim 11, wherein the optoelectronic sensor (60) has fasteners (66) for attaching the foil (62) to the window (30) of the optoelectronic sensor (60).

13. Method for aligning an optoelectronic sensor (10, 60) in the manner of a light sensor, comprising the steps
- Generating at least one measuring light beam (14) in the infrared wavelength range with a measuring light source (12),
- Emitting the measuring light beam (14) along a transmitting beam path (16) into a monitoring area (34),
- Inserting a nonlinear optical element (22, 64) into the transmitting beam path (16), wherein the nonlinear optical element (22, 64) produces at least one pilot light beam (26) in the visible wavelength range from at least one part of the measuring light beam (14),
- Aligning the optoelectronic sensor (10, 60) by means of light spots generated in the monitoring area (34) by the pilot light beam (26).

14. A method according to claim 13, wherein the nonlinear optical element (22) is introduced into the transmitting beam path (16) by means of a mechanism (20) in the sensor (10).

15. The method according to claim 13, wherein the nonlinear optical element (64) is formed as an optical metasurface on a foil (62) which is applied to a window (30) of the sensor (60).

## Revendications

1. Capteur optoélectronique (10, 60) comprenant au moins une source lumineuse de mesure (12) destinée à émettre au moins un faisceau lumineux de mesure (14) dans la plage de longueurs d'onde infrarouge le long d'un chemin optique d'émission (16) jusque dans une zone à surveiller (34), un récepteur de lumière (44) destiné à recevoir des faisceaux lumineux de mesure (38), renvoyés ou réfléchis par la zone à surveiller (34), et à générer des signaux de réception correspondants, une unité de commande et d'évaluation (46) destinée à commander le récepteur de lumière (44) et la source lumineuse de mesure (12) et à évaluer les signaux de réception, **caractérisé en ce que**
le capteur optoélectronique (10) comprend au moins un élément optique non linéaire (22) destiné à générer au moins un faisceau lumineux pilote (26) dans la plage de longueurs d'onde visible à partir d'au moins une partie du faisceau lumineux de mesure (14).

2. Capteur optoélectronique (10) selon la revendication 1,
dans lequel l'élément optique non linéaire (22) comprend au moins un cristal biréfringent.

3. Capteur optoélectronique (10) selon la revendication 1,
dans lequel l'élément optique non linéaire (22) est conçu comme un méta-matériau optique.

4. Capteur optoélectronique (10, 60) selon la revendication 1,
dans lequel l'élément optique non linéaire (22, 64) est conçu comme une méta-surface optique.

5. Capteur optoélectronique (10, 60) selon l'une des revendications précédentes,
dans lequel l'élément optique non linéaire (22, 64) est disposé dans le chemin optique d'émission (16) de telle sorte que le faisceau lumineux de mesure (14) et le faisceau lumineux pilote (26) sont colinéaires, en particulier coaxiaux.

6. Capteur optoélectronique (10) selon l'une des revendications précédentes, dans lequel une optique d'émission (28) destinée à régler l'angle d'ouverture et/ou le diamètre du faisceau lumineux de mesure (14) et/ou du faisceau lumineux pilote (26) est disposée en aval de l'élément optique non linéaire (22) dans la direction du faisceau lumineux.

7. Capteur optoélectronique (10, 60) selon l'une des revendications précédentes,
dans lequel une optique de collimation (18) destinée à collimater le faisceau lumineux de mesure (14) est disposée en amont de l'élément optique non linéaire (22, 64) dans la direction du faisceau lumineux.

8. Capteur optoélectronique (10) selon la revendication 7,
dans lequel l'optique d'émission (28) et/ou l'optique de collimation (18) est conçue comme une optique plate ayant au moins une méta-surface.

9. Capteur optoélectronique (10, 60) selon l'une des revendications précédentes,
dans lequel l'élément optique non linéaire (22, 64) peut être introduit dans le chemin optique d'émission (16) et en être retiré.

10. Capteur optoélectronique (60) selon la revendication 4,
dans lequel l'élément optique non linéaire (64) fait partie d'une fenêtre (30) du capteur optoélectronique.

11. Capteur optoélectronique (60) selon la revendication 4,
dans lequel l'élément optique non linéaire (64) comprend une feuille (62) apte à être appliquée sur une fenêtre (30) du capteur optoélectronique.

12. Capteur optoélectronique (60) selon la revendication 11,
dans lequel le capteur optoélectronique (60) comprend des éléments de fixation (66) destinés à fixer la feuille (62) à la fenêtre (30) du capteur optoélectronique (60).

13. Procédé d'alignement d'un capteur optoélectronique (10, 60) à la manière d'un détecteur de lumière, comprenant les étapes consistant à
- générer au moins un faisceau lumineux de mesure (14) dans la plage de longueurs d'onde infrarouge avec une source lumineuse de mesure (12),
- émettre le faisceau lumineux de mesure (14) le long d'un chemin optique d'émission (16) jusque dans une zone à surveiller (34),
- introduire un élément optique non linéaire (22, 64) dans le chemin optique d'émission (16), l'élément optique non linéaire (22, 64) générant au moins un faisceau lumineux pilote (26) dans la plage de longueurs d'onde visible à partir d'au moins une partie du faisceau lumineux de mesure (14),
- aligner le capteur optoélectronique (10, 60) à l'aide de taches lumineuses générées dans la zone à surveiller (34) par le faisceau lumineux pilote (26).

14. Procédé selon la revendication 13,
dans lequel l'élément optique non linéaire (22) est introduit dans le chemin optique d'émission (16) par un mécanisme (20) situé dans le capteur (10).

15. Procédé selon la revendication 13,
dans lequel l'élément optique non linéaire (64) est conçu comme une méta-surface optique sur une feuille (62) qui est appliquée sur une fenêtre (30) du capteur (60).
